# NEUE EUROPÄISCHE PATENTSCHRIFT

(11) **EP 3 191 333 B2**
(45) Veröffentlichungstag und Bekanntmachung des Hinweises auf die Entscheidung über den Einspruch: **12.10.2022**
(45) Hinweis auf die Patenterteilung: 24.01.2018
(21) Anmeldenummer: 16805276.9
(22) Anmeldetag: 09.11.2016
(51) Int. Cl.: B60K 6/40, B60K 6/48

(54) **HYBRIDMODUL MIT TRENN- UND HAUPTKUPPLUNG UND DAZWISCHEN ANGEORDNETEN BETÄTIGUNGSSYSTEMEN**
HYBRID MODULE COMPRISING A DISCONNECT CLUTCH AND A MAIN CLUTCH AND ACTUATING SYSTEM ARRANGED THEREBETWEEN
MODULE HYBRIDE COMPRENANT DES EMBRAYAGES DE COUPURE ET PRINCIPAL AINSI QUE DES SYSTÈMES D'ACTIONNEMENT DISPOSÉS ENTRE CEUX-CI

(30) Priorität: 25.11.2015 DE 102015223330
(43) Veröffentlichungstag der Anmeldung: 19.07.2017
(73) Patentinhaber: Schaeffler Technologies AG & Co. KG, 91074 Herzogenaurach (DE)
(72) Erfinder: REIMNITZ, Dirk, 77815 Bühl (DE)
(74) Vertreter: DTS Patent- und Rechtsanwälte Schnekenbühl und Partner mbB
(86) Internationale Anmeldenummer: PCT/DE2016/200506
(87) Internationale Veröffentlichungsnummer: WO 2017/088869

(56) Entgegenhaltungen:
- EP-A1- 2 613 065
- EP-B1- 1 427 948
- EP-B1- 2 739 879
- WO-A1-2012/149922
- WO-A1-2015/149804
- DE-A1- 3 737 192
- DE-A1- 4 311 697
- DE-A1- 10 018 926
- DE-A1-102009 035 918
- DE-A1-102011 100 256
- DE-A1-102013 006 429
- DE-A1-102015 213 516
- DE-A1-102015 221 368
- DE-A1-102016 206 217
- DE-T5-112012 000 391
- DE-T5-112012 003 191
- FR-A1- 2 814 121
- FR-A1- 3 005 905
- JP-A- 2014 129 835
- US-A1- 2014 231 174
- US-B1- 6 354 974

## Beschreibung

Die Erfindung betrifft ein Hybridmodul für ein Kraftfahrzeug, wie einen Pkw, einen Lkw oder ein anderes Nutzfahrzeug, zum Ankoppeln an eine Verbrennungskraftmaschine, mit einer Trennkupplung, mittels der die Verbrennungskraftmaschine von einem (nachgelagerten) Antriebsstrang des Kraftfahrzeugs trennbar ist und mittels welcher Drehmoment von der Verbrennungskraftmaschine zum Antriebsstrang verbingbar ist, mit einem Elektromotor, der zum Drehmomentübertragen über eine Hauptkupplung mit dem Antriebsstrang verbindbar ist oder verbunden ist, wobei ein Trennkupplungsbetätigungssystem zum Hervorrufen einer Betätigung der Trennkupplung eingesetzt ist und ein Hauptkupplungsbetätigungssystem zum Hervorrufen einer Betätigung der Hauptkupplung eingesetzt ist. Insbesondere ist das Drehmoment von der Verbrennungskraftmaschine zum Antriebsstrang über die Trennkupplung und die Hauptkupplung (in Reihe) verbringbar.

Aus dem Stand der Technik sind solche Hybridmodule bereits bekannt, bspw. aus der WO 2012/149922 A1. Dort ist nämlich eine Drehmomentübertragungsvorrichtung für einen Antriebsstrang eines Personenkraftfahrzeugs offenbart. Dieser Antriebsstrang weist zwei Antriebsmaschinen auf, wobei eine dieser Antriebsmaschinen ein elektromechanischer Energiewandler ist. Dabei ist diese Drehmomentübertragungsvorrichtung in eine Rotorausnehmung eingesetzt, welche in einer Rotoreinrichtung dieses elektromechanischen Energiewandlers angeordnet ist.

Es sind auch Doppelkupplungen bekannt, die in Hybridmodulen eingesetzt werden. So offenbart bspw. die PCT/DE2015/200242 (WO 2015/149804 A) eine Doppelkupplung zum Kuppeln einer Antriebswelle eines Kraftfahrzeugmotors mit einer ersten Getriebeeingangswelle und/oder einer zweiten Getriebeeingangswelle eines Kraftfahrzeuggetriebes. Es ist dort offenbart, dass eine erste Teilkupplung zum Kuppeln der Antriebswelle mit der ersten Getriebeeingangswelle eingesetzt ist, wobei die erste Teilkupplung eine erste Gegenplatte, eine relativ zur ersten Gegenplatte axial verlagerbare erste Zwischenplatte und eine relativ zur ersten Gegenplatte und zur ersten Zwischenplatte axial verlagerbare erste Anpressplatte zum Verpressen von ersten Reibbelägen einer ersten Kupplungsscheibe zwischen der ersten Gegenplatte und der ersten Zwischenplatte sowie zwischen der ersten Zwischenplatte und der ersten Anpressplatte aufweist. Ferner ist offenbart, dass eine zweite Teilkupplung eingesetzt ist, nämlich zum Kuppeln der Antriebswelle mit der zweiten Getriebeeingangswelle, wobei die zweite Teilkupplung eine zweite Gegenplatte, eine relativ zur zweiten Gegenplatte axial verlagerbare zweite Zwischenplatte und eine relativ zur zweiten Gegenplatte und zur zweiten Zwischenplatte axial verlagerbare zweite Anpressplatte zum Verpressen von zweiten Reibbelägen einer zweiten Kupplungsscheibe zwischen der zweiten Gegenplatte und der zweiten Zwischenplatte sowie zwischen der zweiten Zwischenplatte und der zweiten Anpressplatte aufweist. Es ist ein Kupplungsdeckel eingesetzt, der mit der ersten Gegenplatte und der zweiten Gegenplatte drehfest verbunden ist, nämlich zum Abdecken zumindest eines Teils der ersten Teilkupplung und/oder der zweiten Teilkupplung. Es sind an dem Kupplungsdeckel schwenkbar abgestützte erste Hebelelemente zum Verlagern der ersten Anpressplatte vorhanden und an dem Kupplungsdeckel sind auch schwenkbar abgestützte zweite Hebelelemente zum Verlagern der zweiten Anpressplatte vorhanden. In jener Druckschrift ist auch ein so genanntes "Fünf-Platten-Design", "Sechs-Platten-Design" und "Sieben-Platten-Design" vorgestellt, genauso wie ein "Acht-Platten-Design".

Aus einer älteren Anmeldung der Patentanmelderin, nämlich der DE 10 2015 207 470 A1, ist auch ein modularer Aufbau eines Antriebsstranges bekannt. So wird in jener Druckschrift bspw. ein System aus einer Doppelkupplung und mehreren mit ihr zusammenwirkenden Schnittstellenbauteilen offenbart, wobei die Schnittstellenbauteile einerseits zur Drehmomentweitergabe an die Doppelkupplung oder von der Doppelkupplung weg oder andererseits zum Bewirken einer Stellbewegung oder desweiteren zum Lagern / Sichern ausgelegt sind, wobei wenigstens eine Teilkupplung der Doppelkupplung nach einer ersten Art, nämlich nach Art einer Mehrscheibenkupplung mit einer ersten Anzahl von Reibscheiben oder nach einer zweiten Art, nämlich mit einer zweiten Anzahl von der ersten Anzahl verschiedenen Anzahl von Reibscheiben, bevorzugt nach Art einer Einscheibenkupplung, ausgelegt ist, wobei als besonders herausgestellt ist, dass bei Einsatz einer Teilkupplung der einen Art wenigstens ein Schnittstellenbauteil auf den Einsatz von Teilkupplungen nur der anderen Art ausgelegt und positioniert ist.

Die Erfindung ist also im Bereich von Kupplungen für Hybridfahrzeuge eingesetzt. So genannte "MDD"-Kupplungen, "Modular Directly Controlled-Clutches", insbesondere Doppelkupplungen haben sich bewährt. Solche Art von Kupplungen sollen aber weiterentwickelt werden. Sie sollen besonders kostengünstig sein und vorhandenen Bauraum besonders gut nutzen. Ferner sollen die aus dem Stand der Technik bekannten Nachteile beseitigt oder wenigstens gemildert werden. Mit anderen Worten, soll gerade ein kompaktes und bauteilsparendes Hybridmodul entwickelt werden. Einzelne, voneinander getrennte Bauteile, die normalerweise für die Funktion der Hauptkomponenten einer Trennkupplung und einer Doppelkupplung im Wirkzusammenhang mit einem Elektromotor benötigt werden, sollen zusammengefasst werden.

Diese Aufgabe wird durch ein erfindungsgemäßes Hybridmodul und einer Antriebsanordnung mit den Merkmalen des jeweiligen unabhängigen Anspruches gelöst. Vorteilhafte Weiterbildungen sind in den Unteransprüchen definiert. Dabei sind unter anderem beide Betätigungssysteme, etwa in Axialrichtung gesehen, zwischen der Trennkupplung und der Hauptkupplung angeordnet. Auf diese Weise werden Bauteile für mehrere Hauptkomponenten gemeinsam genutzt bzw. ähnliche Bauteile zu neuen Baugruppen zusammengefasst, die sich so leichter herstellen und/oder montieren lassen.

Der Grundaufbau des vorgeschlagenen Hybridsystems mit einem Hybridmodul besteht also darin, dass die Trennkupplung und die "MDD"-Kupplung auf den gegenüberliegenden axialen Seiten des Elektromotors angeordnet sind und/oder eine oder beide Kupplungen an den beiden gegenüberliegenden Seiten radial innerhalb / unter des Elektromotors angeordnet sind. Alle drei Betätigungssysteme für die Kupplungen des Hybridmoduls sind in unmittelbarer Nähe zueinander angeordnet oder sogar in einer gemeinsamen Baugruppe zusammengefasst. Es gibt eine Lagerstelle, auf der der Rotor des Elektromotors gemeinsam mit der Doppelkupplung gelagert ist. Durch diese Lagerstelle kann der Rotor des Elektromotors und die Doppelkupplung mit einem gemeinsamen Lagerträger abgestützt werden, bspw. am Kupplungsgehäuse. Der Lagerträger und die Betätigungssysteme können eine gemeinsame Baugruppe bilden.

Der Lagerträger ist dabei gehäusefest, bevorzugt drehfest mit einem Gehäuseteil, bzw. Kupplungsgehäuse, Kupplungsglocke oder Getriebegehäuse verbunden.

So ist es von Vorteil, wenn die Hauptkupplung als eine Einfachkupplung oder als eine Doppelkupplung (mit zwei Teilkupplungen) ausgebildet ist.

Eine zugkraftunterbrechungsfreie Drehmomentweitergabe lässt sich gerade beim Einsatz von Doppelkupplungen realisieren, was gewünscht ist.

Die Anzahl an Bauteilen lässt sich drastisch reduzieren, wenn erfindungsgemäß die beiden Betätigungssysteme in einem gemeinsamen, vorzugsweise einstückig ausgebildeten Lagerträger integriert sind.

Auch ist es von Vorteil, wenn eine Zwischenwelle auf dem Lagerträger gleit- oder wälzgelagert ist, wobei die Zwischenwelle eine solche Welle ist, die bei einer Stellung der Hauptkupplung derart, dass kein Drehmoment von dem Elektromotor und/oder der Verbrennungskraftmaschine auf eine Getriebeeingangswelle, etwa auf eine innere Getriebewelle oder eine äußere Getriebewelle, verbracht wird, relativ zur Getriebewelle drehbeweglich gelagert ist. Der Lagerträger ist dabei mit dem Getriebegehäuse, Kupplungsgehäuse oder Motorblock verbunden und somit in der Lage die Zwischenwelle abzustützen und zu lagern. Eine bedarfsgerechte Entkopplung der einzelnen Bauteile ist dann wirkungsvoll realisierbar.

Wenn das Trennkupplungsbetätigungssystem und/oder das Hauptkupplungsbetätigungssystem als ein hydraulisches System, ein hydrostatisches System, ein pneumatisches System, ein elektromechanisches System oder ein (rein) mechanisches, etwa hebelbetätigtes System ausgebildet ist, so kann auf einfach zu aktuierende und/oder ausfallsicherer Komponenten zurückgegriffen werden.

Je nachdem, welche Art an (Haupt- / Trenn-)Kupplungsbetätigungssystem eingesetzt wird, kann eine flexible Versorgung mit Hydraulikfluid, wie Öl genutzt werden, oder auf eine Hydraulikfluidversorgung verzichtet werden, beispielsweise indem eine pneumatische, mechanische oder elektrische Energiezufuhr verwendet wird. Die Kupplungsbetätigungssysteme können mit Energiespeichern, z.B. Tellerfedern oder Kraftübersetzungselementen, z.B. Hebeln, kombiniert werden. Die Kosten und die Langlebigkeit können dann gewünscht eingestellt werden.

Besonders bewährt hat es sich, wenn das Trennkupplungsbetätigungssystem und/ oder das Hauptkupplungsbetätigungssystem einen oder mehrere CSCs (Concentric Slave Cylinders / Zentrale Kupplungsausrücker) umfasst. Eine einfache Anbindung an Sekundär Aktoren ist dann realisierbar. Auch der Einsatz von mechanischen und/oder elektromechanischen Aktoren, z.B. EZA, ist sinnvoll.

Es ist auch von Vorteil, wenn der CSC des Trennkupplungsbetätigungssystems einen aus dem Lagerträger in Richtung der Verbrennungskraftmaschine verlagerbaren / verfahrbaren / axial verschieblichen Trennkupplungskolben besitzt und/oder zumindest einer der CSCs des Hauptkupplungsbetätigungssystems einen aus dem (gleichen) Lagerträger in Richtung eines Getriebes verlagerbaren / verfahrbaren / axial verschiebbaren Hauptkupplungskolben besitzt oder beide CSCs des Hauptkupplungsbetätigungssystems jeweils einen solchen in Richtung des Getriebes verlagerbaren Hauptkupplungskolben besitzt.

Es ist zweckmäßig, wenn die Zwischenwelle mittels möglichst eines Lagerträgerwälzlagers oder eines Lagerträgergleitlagers auf dem gemeinsamen Lagerträger der beiden Betätigungssysteme radial und/oder axial abgestützt / gelagert ist. Es lässt sich dann sowohl für den Rotor als auch für die Hauptkupplung eine gemeinsame Abstützung wählen.

Auch ist es vorteilhaft, wenn eine gemeinsame Lagerstelle an dem gemeinsamen Lagerträger ausgebildet ist, die die Zwischenwelle, einen Rotor des Elektromotors, die Hauptkupplung / eine Kupplungsglocke der Hauptkupplung und/oder die Trennkupplung / eine Druckplatte oder Kupplungsglocke der Trennkupplung drehbeweglich (relativ zu einem Kupplungsgehäuse) axial und/oder radial lagert. Dadurch kann die Anzahl der einzusetzenden Lagerstellen deutlich verringert werden.

Dabei ist es von Vorteil, wenn das Lagerträgerwälzlager eine solch große axiale Länge besitzt, dass ein Verkippen des Lagerträgers verhindert ist. Das Lagerträgerwälzlager oder Lagerträgergleitlager kann aus mehreren Einzellagern bestehen, die radial und/oder Axialkräfte abstützen können.

Um eine besonders langlebige Verbindungsart zu erreichen, ist es von Vorteil, wenn eine Kupplungsglocke der Hauptkupplung, an der bspw. eine oder zwei Gegenplatten befestigt ist/sind, an der Zwischenwelle form-, kraft- und/oder stoffschlüssig befestigt ist.

Wenn eine drehmomentübertragende, vorzugsweise unlösbare Verbindung, etwa eine Schweißverbindung, zwischen einem integralen, zumindest abschnittsweise in Radialrichtung abstehenden Zwischenwellenflansch der Zwischenwelle und der Kupplungsglocke vorhanden ist, so lässt sich eine besonders kompakte Bauart realisieren.

Dabei ist es auch von Vorteil, wenn auf dem Zwischenwellenflansch ein Rotor des Elektromotors drehfest angebracht ist, da sich dadurch die Bauteilanzahl reduziert.

Um umständliche Kontaktierungen zu verhindern, ist es von Vorteil, wenn der Rotor einen Permanentmagneten besitzt.

Es hat sich auch bewährt, wenn die Hauptkupplung und/oder die Trennkupplung als Mehrscheibenkupplung ausgebildet ist, also zumindest eine Zwischenplatte zwischen wenigstens zwei Kupplungsscheiben besitzt, wobei die Kupplungsscheiben und die wenigstens eine Zwischenplatte von einer bestimmten Anpressplatte und einer bestimmten Gegendruckplatte einklemmbar sind. Die Zwischenplatte gehört funktionsbedingt eher zu den Anpressplatten und den Gegenplatten, da sie mit diesen drehfest verbunden ist. Die Besonderheiten der PCT/DE 2015/200242 und der DE 10 2015 207 470 A1, sollen diesbezüglich als hier integriert gelten.

Für die Montage ist es auch zuträglich, wenn die Trennkupplung und die Hauptkupplung an gegenüberliegenden Enden des Elektromotors angeordnet sind. Es sind zwar bereits Hybridmodule bekannt, welche über eine Trennkupplung eine Verbindung einer Getriebeeingangswelle wahlweise mit einem Elektromotor oder einer Verbrennungskraftmaschine ermöglichen, doch wird nun eine Verbesserung angepeilt. Die Trennkupplung soll weiter radial innerhalb des Elektromotors angeordnet sein.

Die Erfindung schlägt ein System aus einem Hybridmodul mit einer Trennkupplung und einer Doppelkupplung für ein Doppelkupplungsgetriebe vor, wobei die Aktorik für beide Kupplungsaggregate in einem gemeinsamen Lagerträger innerhalb der Elektromaschine angeordnet ist. Der Lagerträger kann mit dem Kupplungsgehäuse verbunden sein oder ein integraler Bestandteil des Kupplungsgehäuses und/oder eines speziellen Gehäuses für den E-Motor und/oder des gesamten Hybridmoduls sein.

Die axiale Reihenfolge lautet: Kurbelwelle, Trennkupplung (auf Zwischenwelle), Aktorik (die die Zwischenwelle trägt) und Doppelkupplung. Die Doppelkupplung ist auf der Zwischenwelle gelagert. Die Trennkupplung kann sich auf der Kurbelwelle oder der Zwischenwelle abstützen.

Die Betätigungskräfte der Gesamtaktorik können in einer ersten Alternative über die Kurbelwelle und in einer zweiten Alternative über ein Lager der Trennkupplung über die Zwischenwelle und den Lagerträger in das Kupplungsgehäuse eingeleitet werden.

Die Zwischenwelle kann den Rotorträger als integralen Bestandteil umfassen. Der Lagerträger umfasst (einteilig oder mehrteilig) einen Zylinder für Kurzkolben und die Zuführung des Hydraulikfluids für deren Betätigung. Beide Kupplungen können auch radial innerhalb des Rotors angeordnet sein.

Bei der Doppelkupplung kann es sich um eine "MDD"-Kupplung handeln, wie sie bereits aus der DE 10 2015 207 470 A1 bekannt ist. Sie kann auch alternativ hebelbetätigt sein, wie es in der PCT/DE 2015/200242 offenbart ist. Sie kann entsprechend mehrere oder nur eine Reibscheibe pro Kupplung aufweisen. Doppelkupplungen mit mehreren Scheiben pro Teilkupplung haben nämlich den Vorteil, dass sie radial kleiner aufbauen und so eher radial innerhalb des Rotors verschachtelt werden können. Im Kern steht also, dass eine Aktorikbaugruppe bereitgestellt wird, die als gemeinsame Baugruppe ausgebildet ist. Die Erfindung ist im Bereich Elektromobilität angeordnet und setzt auf eine direkte Mehrscheibendoppelkupplung.

Die Erfindung wird nachfolgend mit Hilfe einer Zeichnung näher erläutert. Dabei sind drei unterschiedliche Ausführungsbeispiele der Erfindung dargestellt. Es zeigen:
- Fig. 1: einen Teil eines Längsschnitts eines erfindungsgemäßen Hybridmoduls,
- Fig. 2: ein zweites Ausführungsbeispiel, in einer zur Fig. 1 vergleichbaren Darstellungsweise, wobei die Doppelkupplung zwei (Teil-)Mehrscheibenkupplungen besitzt, und
- Fig. 3: ein drittes Ausführungsbeispiel, in einer zur Fig. 1 vergleichbaren Darstellungsweise, bei der aber anders als im ersten Ausführungsbeispiel die Trennkupplung nicht an einem Zweimassenschwungrad abgestützt ist, sondern auf einer Zwischenwelle abgestützt ist, da es bei dieser Auslegung zu erwarten ist, dass keine nennenswerten Axialkräfte über die Kurbelwelle übertragen werden.

Die Figuren sind lediglich schematischer Natur und dienen nur dem Verständnis der Erfindung. Die gleichen Elemente sind mit denselben Bezugszeichen versehen. Elemente der einzelnen Ausführungsbeispiele können auch in den anderen Ausführungsbeispielen eingesetzt werden, sie sind also untereinander austauschbar.

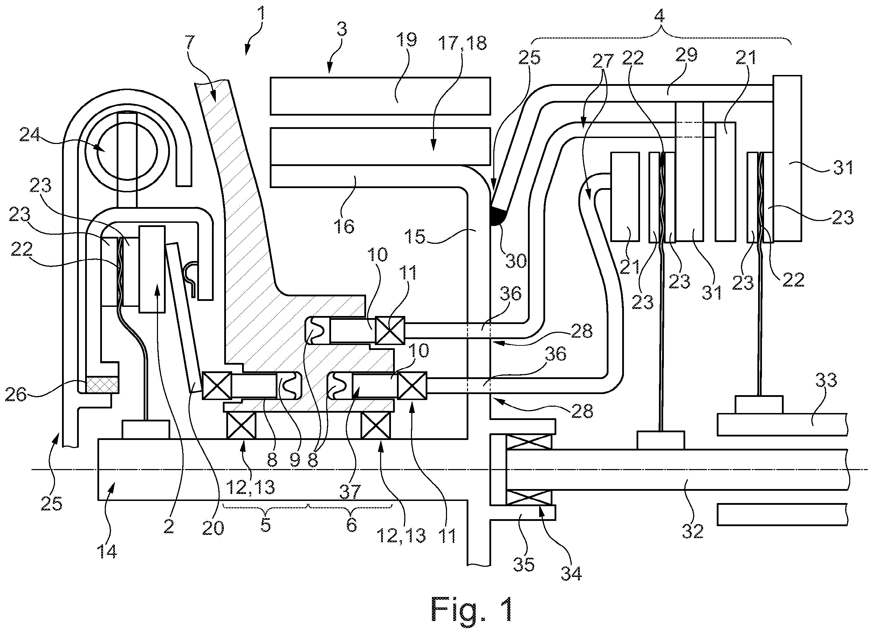

In Fig. 1 ist eine erste Ausführungsform eines erfindungsgemäßen Hybridmoduls 1 dargestellt. Das Hybridmodul 1 ist zwischen einer nicht dargestellten Verbrennungskraftmaschine und einem nicht dargestellten Getriebe eingesetzt. Das Getriebe ist aber zum Ankoppeln an diese Verbrennungskraftmaschine / Drehmomentverbringen von der Verbrennungskraftmaschine vorgesehen / vorbereitet.

Dafür ist u.a. nämlich eine Trennkupplung 2 vorhanden. Diese Trennkupplung 2 wird auch als "K0"-Kupplung bezeichnet. Über die Trennkupplung 2 wird selektiv, d.h. bei Betätigung der Trennkupplung 2, Drehmoment in Richtung eines Antriebsstranges verbracht, oder - in einer anderen Ausführungsform der Trennkupplung 2 - eben gerade der Drehmomentfluss unterbrochen.

Zwischen der Trennkupplung 2 und dem nicht dargestellten Getriebe ist ein Elektromotor 3 angeordnet, der als Elektromaschine einsetzbar ist. Der Elektromotor kann auch kurz als E-Motor bezeichnet werden.

Es gibt auch eine Hauptkupplung 4 zwischen dem Elektromotor 3 und dem Getriebe.

Es gibt für die Trennkupplung 2 ein Betätigungssystem, nämlich ein Trennkupplungsbetätigungssystem 5. Ferner gibt es für die Hauptkupplung 4 ein Betätigungssystem, nämlich ein Hauptkupplungsbetätigungssystem 6. Die beiden Betätigungssysteme 5 und 6 sind in einem gemeinsamen Lagerträger 7 integriert. Der Lagerträger 7 ist hier mit einem fahrzeugrahmenfesten Abschnitt / Gehäuse in Form eines Kupplungsgehäuses 41 fest verbunden. Alternativ oder zusätzlich kann das Gehäuse auch als ein Getriebegehäuse, Gehäuse der Verbrennungskraftmaschine und/oder ein Elektromotorgehäuse ausgebildet sein. Der (gemeinsame) Lagerträger 7 weist Ausfahrräume 8 (Zylinder) auf, in denen entweder ein Trennkupplungskolben 9 oder einer bzw. zwei Hauptkupplungskolben 10 axial verschieblich angeordnet sind. Die Hauptkupplungskolben 10 verfahren dann diametral in die andere Richtung als der Trennkupplungskolben 9. Der Trennkupplungskolben 9 bzw. die Hauptkupplungskolben stützen sich an Betätigungslagern 11 ab.

Die Zwischenwelle 14 ist über eine gemeinsame Lagerstelle 12 im Bereich eines Lagerträgerwälzlagers 13 an einem Lagerträger 7 radial abgestützt. An der Zwischenwelle 14 ist ein integraler Zwischenwellenflansch 15 vorhanden. Der Zwischenwellenflansch 15 weist einen Trägerabschnitt 16 auf. Der Zwischenwellenflansch 15 ist (exakt) in Radialrichtung ausgerichtet, wohingegen der Trägerabschnitt 16 (exakt) in Axialrichtung ausgerichtet ist. Zwischenwellenflansch 15 und Trägerabschnitt 16 erstrecken sich auch in Umfangsrichtung und können Unterbrechungen aufweisen z.B. für Durchgriffe der Drucktöpfe 27 oder derer Drucktopverlängerungen 36.

Auf dem Trägerabschnitt 16, nämlich auf seiner radialen Außenseite, insbesondere seiner Außenumfangsfläche, ist ein Rotor 17 angebracht. Der Rotor 17 kann einen Permanentmagneten 18 aufweisen. Ein damit zusammenwirkender Stator 19 ist radial außerhalb dazu angedeutet.

Im unbetätigten Zustand übt das Hebelelement 20 (in Form einer Tellerfeder) der Trennkupplung 2 Kraft auf die Anpressplatte 21 aus, so dass die Kupplungsscheibe 22 mit darauf angebrachten Reibbelägen 23 zwischen der Anpressplatte 21 und der Gegenplatte / Zwischenplatte 38 zum Zwecke der Drehmomentübertragung festgeklemmt wird. Zum Öffnen der Trennkupplung 2 drückt das von dem Trennkupplungskolben 9 aktivierte Betätigungslager 11 auf ein Hebelelement 20 (z.B. Tellerfederzungen), um die Kraft der Tellerfeder zu überwinden und die Kupplungsscheibe 22 zu entlasten. Die Kupplungsscheibe 22 ist dauerhaft drehmomentweitergebend an der Zwischenwelle 14 angebunden, aber axial verschieblich dort gelagert. Die Figuren 1 bis 3 zeigen aufgedrückte (normal geschlossene) Trennkupplungen 2. Eine zugedrückte (normal geöffnete) Trennkupplung 2 ist technisch natürlich auch in weiteren Ausführungen realisiert.

Ein Zweimassenschwungrad (ZMS) 24 weist eine Verbindungsstelle 25 zur Anbindung an bspw. einer Kurbelwelle, zum Weitergeben von Drehmoment von der Verbrennungskraftmaschine auf. Am Zweimassenschwungrad 24 stützt sich ein Lager 26 ab, mittels dessen die Trennkupplung 2 radial und axial abgestützt ist.

Die von den Hauptkupplungskolben 10 betätigbaren Bauteile werden als Drucktöpfe 27 ausgebildet, welche durch Fenster 28 im Zwischenwellenflansch 15 durchgeführt sind.

Am Zwischenwellenflansch 15 ist auch eine Kupplungsglocke 29 befestigt, nämlich an einer Schweißnaht 30 angeschweißt. Die Kupplungsglocke 29 kann auch als Deckel oder Mitnehmerring bezeichnet werden.

Die Hauptkupplung 4 ist als Doppelkupplung ausgebildet. Dazu kann prinzipiell eine mechanische, elektromechanische, hydrostatische, pneumatische oder hydraulische Betätigung realisiert und eingesetzt werden.

An der Kupplungsglocke 29 sind zwei Gegenplatten 31 befestigt. Jene zwischen einer Anpressplatte 21 und der Gegenplatte 31 einklemmbare Kupplungsscheibe 22 ist drehfest, aber axial verschieblich an entweder einer inneren Getriebeeingangswelle 32 oder einer äußeren Getriebeeingangswelle 33 angebunden. Die innere Getriebeeingangswelle 32 ist mittels eines Pilotlagers 34 an einem Bund 35 der Zwischenwelle 14 gelagert. Radial außerhalb davon greifen stegförmige Drucktopfverlängerungen 36 durch die Fenster 28. Das Hauptkupplungsbetätigungssystem 6 umfasst in dieser Ausführung wenigstens einen CSC 37.

An der Verbrennungskraftmaschine ist somit eine erste Kupplung, nämlich die Trennkupplung 2 angeordnet, über die das Drehmoment der Verbrennungskraftmaschine / des Motors in die Zwischenwelle 14 eingeleitet werden kann. Zur Senkung von Drehungleichförmigkeiten ist bei diesem Ausführungsbeispiel das Zweimassenschwungrad (ZMS) 24 zwischen der Verbrennungskraftmaschine und der Trennkupplung 2 angeordnet. Die Trennkupplung 2 kann als zugedrückte und als aufgedrückte Kupplung ausgeführt werden, besonders sinnvoll ist jedoch der Einsatz einer aufgedrückten Kupplung, da diese geringere Betätigungskräfte nach sich zieht.

Die Zwischenwelle 14 ist nicht nur mit der Trennkupplung 2 verbunden, sondern auch mit dem Rotor 17 der Elektromaschine / des Elektromotors 3 und mit der Doppelkupplung (Hauptkupplung). Dabei ist es besonders sinnvoll, wenn der Rotor 17 der Elektromaschine / des Elektromotors 3 und die Doppelkupplung starr mit der Zwischenwelle 14 verbunden sind, damit nicht nur Drehmoment zwischen den Komponenten übertragen werden kann, sondern der Rotor 17 mit der Doppelkupplung auch über die Zwischenwelle 14 gelagert, zentriert und abgestützt werden kann. Dadurch ist es möglich, die Kupplungsscheibe 22 der Trennkupplung 2, die Zwischenwelle 14, den Rotor 17 des Elektromotors 3 und die Doppelkupplung auf einer gemeinsamen Lagerbasis abzustützen. Dies reduziert die Anzahl der Lagerstellen deutlich im Vergleich zu anderen Konzepten und führt dadurch zu einem kompakten und preisgünstigen Hybridmodul 1.

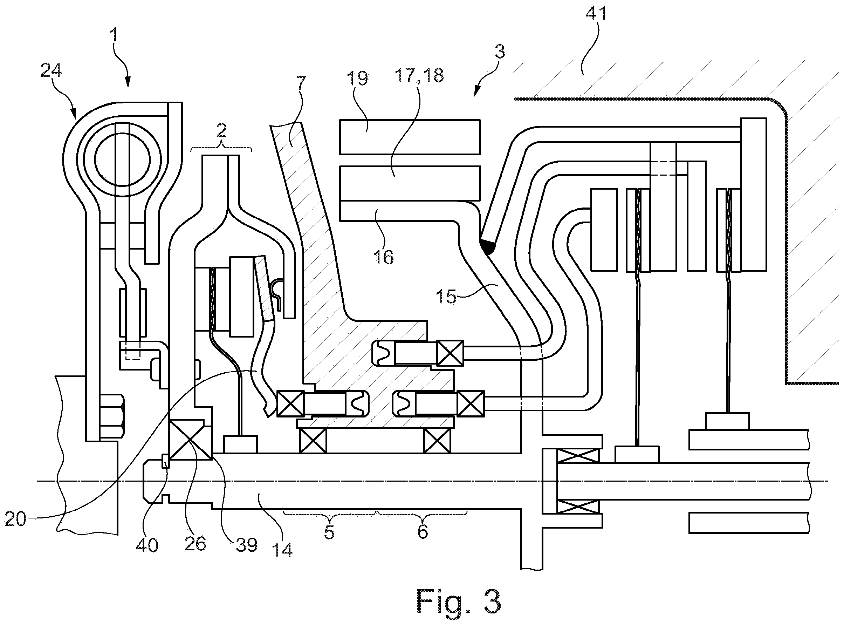

Damit diese zentrale Lagerstelle 12 ausreichend robust und exakt genug für die Lagerung des Rotors 17 ausgeführt werden kann, empfehlt sich eine breite Lagerbasis, bspw. mit einer Festlager/Loslager-Kombination oder zwei verspannte Schrägkugellager 13. Die breite Lagerbasis und die robuste Anbindung zu einem fahrzeugrahmenfesten Gehäuse in Form eines Kupplungsgehäuses 41 (Fig. 3) oder eines Hybridmodulgehäuses wird bei dem Ausführungsbeispiel durch einen Lagerträger 7 ermöglicht, der sich von der Lagerstelle an der Zwischenwelle 14 radial nach außen erstreckt, nämlich zwischen dem Zweimassenschwungrad 24 und dem Elektromotor 3 hindurch. In dem Lagerträger 7 können die Kupplungsbetätigungssysteme für die drei Kupplungen, also die Trennkupplung 2 und die beiden Teilkupplungen der als Doppelkupplung ausgebildeten Hauptkupplung 4, integriert werden oder ganz oder teilweise an ihm befestigt werden. Die Hauptkupplung 4 kann auch als einzelne Kupplung also als Einfachkupplung ausgeführt werden. Wenn die Betätigungssysteme 5 und/oder 6 als CSCs ausgeführt werden, kann dazu das (jeweilige/gemeinsame) CSC-Gehäuse einteilig in den Lagerträger übergehen oder es kann eine gemeinsame Baugruppe zwischen dem Lagerträger 7 und den CSCs gebildet werden.

Die Hydraulikleitungen für die CSCs können ebenfalls in den Lagerträger 7 integriert werden oder der Lagerträger 7 kann Aussparungen aufweisen, damit die Leitungen möglichst platzsparend zwischen dem ZMS 24 und der Trennkupplung 2 auf der einen Seite und dem Elektromotor 3 auf der anderen Seite hindurchgeführt werden können.

Die radial innenliegende Zwischenwelle 14 ist mit dem radial außen angeordneten Rotor 17 und der Doppelkupplung über ein starres, gelochtes, scheibenförmiges Bauteil oder über Speichen verbunden. Die Zwischenwelle 14, der Zwischenwellenflansch 15 beispielsweise ausgeführt als starres, gelochtes, scheibenförmiges Bauteil oder als Speichen und der Trägerabschnitt 16 können einteilig oder mehrteilig ausgeführt werden.

Durch diese auf dem Umfang verteilten Löcher oder Speichenzwischenräumen ragen stegförmige Drucktopfverlängerungen 36 oder mit den Drucktöpfen 27 der Doppelkupplung zusammenwirkende axial verlagerbare Stifte oder Stege. Dadurch kann die Kraft der stehenden Kupplungsbetätigungssysteme vom Betätigungslager 11 auf das drehende System des Hybridmoduls 1 übertragen werden, und dann durch die Durchgriffe auf die Doppelkupplung übertragen werden.

Es kann also zwischen den Fahrzuständen "Fahren mit dem Verbrennungsmotor" und "Fahren mit dem Elektromotor" hin- und hergeschaltet werden und es können diese kombiniert werden. Für das "Fahren mit dem Verbrennungsmotor" wird bei geschlossener Trennkupplung 2 das Motordrehmoment auf die Zwischenwelle 14 übertragen und von dort über die Doppelkupplung in die innere oder die äußere Getriebeeingangswelle 32 oder 33 eingeleitet. Da sich der Elektromotor 3 beim Fahren mit der Verbrennungskraftmaschine immer mit dreht, kann dieser ggf. auch als Generator mitlaufen oder die Verbrennungskraftmaschine unterstützen, etwa im so genannten "Boost-Betrieb".

Für das Fahren mit dem Elektromotor 3 ist es dann einfach einrichtbar, bei geöffneter Trennkupplung 2 die Verbrennungskraftmaschine komplett von dem Hybridmodul 1 zu entkoppeln, sodass die Verbrennungskraftmaschine abgestellt werden kann. Der Antrieb des Fahrzeugs erfolgt dann (ausschließlich) über den Elektromotor 3, der die Doppelkupplung antreibt und über diese Drehmoment auf die innere oder die äußere Getriebeeingangswelle 32 bzw. 33 überträgt.

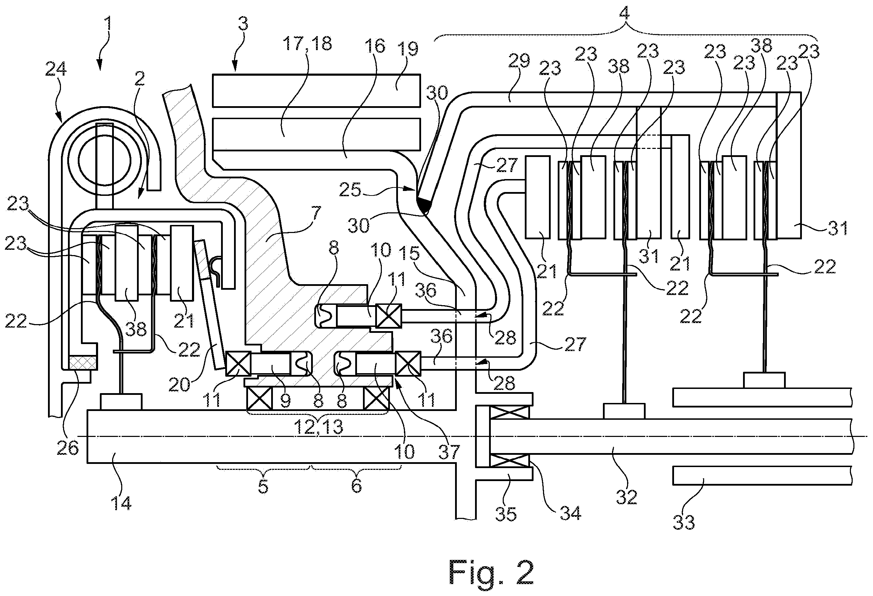

In dem in Fig. 2 dargestellten zweiten Ausführungsbeispiel ist ein grundsätzlich ähnlicher Aufbau zu dem Ausführungsbeispiel der Fig. 1 dargestellt, wobei jedoch in dem zweiten Ausführungsbeispiel Zwischenplatten 38 eingesetzt sind. Dadurch ist im Bereich der Hauptkupplung 4 eine so genannte "Mehrscheibendoppelkupplung" realisierbar. Dies ermöglicht die Übertagung von hohen Drehmomenten bei vergleichsweise geringen Betätigungskräften und/oder geringem Durchmesser.

Wenn der Elektromotor 3 axial noch breiter ausgeführt ist, bietet dieses Mehrscheibenkonzept auch die Möglichkeit die Doppelkupplung radial so klein aufzubauen, dass sie zumindest teilweise radial unter / in dem Elektromotor 3 angeordnet werden kann.

Die Trennkupplung 2 kann natürlich auch ganz oder teilweise radial unterhalb des Elektromotors 3 angeordnet werden. Die dabei notwendige Kröpfung des Lagerträgers 7 ist in Fig. 2 angedeutet. Bei dem abgebildeten Ausführungsbeispiel ist auch die Trennkupplung 2 als Zwei-Scheiben-Kupplung ausgeführt. Je nach Anwendungsfall können alle Kupplungen 2 bzw. 4 des Hybridmoduls 1 viele Scheiben / Zwischenplatten 38 aufweisen.

In Fig. 3 ist ein drittes Ausführungsbeispiel dargestellt, das sich von dem in der Fig. 1 dargestellten Ausführungsbeispiel dadurch unterscheidet, dass das Lager 26 nun auf der Zwischenwelle 14 festgelegt ist und sich an einer Schulter 39 der Zwischenwelle 14 und einem Sicherungsring 40 abstützt. Natürlich ist hier, wenn auch nicht dargestellt, der Einsatz von weiteren Zwischenplatten 38, wie in dem Ausführungsbeispiel der Fig. 2 dargestellt, ebenso möglich.

Um die axialen Betätigungskräfte der Trennkupplung 2 (letztlich) nicht über eine Kurbelwelle abstützen zu müssen, wie dies bei den Ausführungsbeispielen 1 und 2 der Fall ist, zeigt die Fig. 3 eine Trennkupplung 2, die auf der Zwischenwelle 14 gelagert ist.

Bei diesem Ausführungsbeispiel ist nur die Primärseite des Drehschwingungsdämpfers an der Kurbelwelle befestigt. Der Flansch eines Dämpfers (auf einer Sekundärseite) ist über eine Steckverzahnung mit der auf der Zwischenwelle 14 gelagerten Gegenplatte der Trennkupplung 2 verbunden. Die axialen Betätigungskräfte der Trennkupplung 2 können so über das spezielle Stützlager in die Zwischenwelle 14 eingeleitet werden, von wo sie über die Zwischenwellenlagerung und den Lagerträger 7 in das Kupplungsgehäuse 41 oder das Hybridsystemgehäuse abgeleitet werden.

### Bezugszeichenliste

- 1: Hybridmodul
- 2: Trennkupplung
- 3: Elektromotor
- 4: Hauptkupplung
- 5: Trennkupplungsbetätigungssystem
- 6: Hauptkupplungsbetätigungssystem
- 7: Lagerträger
- 8: Ausfahrraum
- 9: Trennkupplungskolben
- 10: Hauptkupplungskolben
- 11: Betätigungslager
- 12: gemeinsame Lagerstelle
- 13: Lagerträgerwälzlager
- 14: Zwischenwelle
- 15: Zwischenwellenflansch
- 16: Trägerabschnitt
- 17: Rotor
- 18: Permanentmagnet
- 19: Stator
- 20: Hebelelement
- 21: Anpressplatte
- 22: Kupplungsscheibe
- 23: Reibbelag
- 24: Zweimassenschwungrad
- 25: Verbindungsstelle
- 26: Lager
- 27: Drucktopf
- 28: Fenster
- 29: Kupplungsglocke
- 30: Schweißnaht
- 31: Gegenplatte
- 32: innere Getriebeeingangswelle
- 33: äußere Getriebeeingangswelle
- 34: Pilotlager
- 35: Bund
- 36: stegförmige Drucktopfverlängerung
- 37: CSC
- 38: Zwischenplatte
- 39: Schulter
- 40: Sicherungsring
- 41: Kupplungsgehäuse

## Patentansprüche

1. Hybridmodul (1) für ein Kraftfahrzeug zum Ankoppeln einer Verbrennungskraftmaschine, mit einer Trennkupplung (2), mittels der die Verbrennungskraftmaschine von einem Antriebsstrang des Kraftfahrzeugs trennbar ist und mittels welcher Drehmoment von der Verbrennungskraftmaschine zum Antriebsstrang verbringbar ist, mit einem Elektromotor (3), der zum Drehmomentübertragen über eine Hauptkupplung (4) mit dem Antriebsstrang verbindbar ist, wobei ein Trennkupplungsbetätigungssystem (5) zum Hervorrufen einer Betätigung der Trennkupplung (2) eingesetzt ist und ein Hauptkupplungsbetätigungssystem (6) zum Hervorrufen einer Betätigung der Hauptkupplung (4) eingesetzt ist, **dadurch gekennzeichnet, dass** beide Betätigungssysteme (5, 6) zwischen der Trennkupplung (2) und der Hauptkupplung (4) angeordnet sind und dass die beiden Betätigungssysteme (5, 6) in einem gemeinsamen Lagerträger (7) integriert sind, wobei der gemeinsame Lagerträger (7) Ausfahrräume aufweist, in denen entweder ein Trennkupplungskolben oder ein Hauptkupplungskolben axial verschiebbar angeordnet sind,
wobei der gemeinsame Lagerträger (7) mit einem fahrzeugrahmenfesten Abschnitt oder Gehäuse fest verbunden ist.

2. Hybridmodul (1) nach Anspruch 1, **dadurch gekennzeichnet, dass** die Hauptkupplung (4) als eine Einfachkupplung oder als eine Doppelkupplung ausgebildet ist.

3. Hybridmodul (1) nach Anspruch 1 oder 2, **dadurch gekennzeichnet, dass** eine Zwischenwelle (14) auf dem Lagerträger (7) gelagert ist, wobei die Zwischenwelle (14) eine solche Welle ist, die bei einer Stellung der Hauptkupplung (4) derart, dass kein Drehmoment von dem Elektromotor (3) und/oder der Verbrennungskraftmaschine auf eine Getriebeeingangswelle (32, 33) verbracht wird, relativ zur Getriebewelle (32, 33) drehbeweglich gelagert ist.

4. Hybridmodul (1) nach einem der Ansprüche 1 bis 3, **dadurch gekennzeichnet, dass** das Trennkupplungsbetätigungssystem (5) und/oder das Hauptkupplungsbetätigungssystem (6) als ein hydraulisches, hydrostatisches, pneumatisches, elektromechanisches oder mechanisches System ausgebildet ist.

5. Hybridmodul (1) nach Anspruch 4, **dadurch gekennzeichnet, dass** das Trennkupplungsbetätigungssystem (5) und/oder das Hauptkupplungsbetätigungssystem (6) einen oder mehrere CSCs (37) umfasst.

6. Hybridmodul (1) nach einem der Ansprüche 3 bis 5, **dadurch gekennzeichnet, dass** der gemeinsame Lagerträger (7) der beiden Betätigungssysteme (5, 6) mittels möglichst eines Lagerträgerwälzlagers (13) oder eines Lagerträgergleitlagers die Zwischenwelle (14) radial und/oder axial abstützt / lagert.

7. Hybridmodul (1) nach einem der Ansprüche 3 bis 6, **dadurch gekennzeichnet, dass** eine gemeinsame Lagerstelle (12) an dem gemeinsamen Lagerträger (7) ausgebildet ist, die die Zwischenwelle (14), einen Rotor (17) des Elektromotors (3), die Hauptkupplung (4) und/oder die Trennkupplung (2) drehbeweglich lagert.

8. Hybridmodul (1) nach einem der Ansprüche 1 bis 7, **dadurch gekennzeichnet, dass** die Hauptkupplung (4) und/oder die Trennkupplung (2) als Mehrscheibenkupplung ausgebildet ist.

9. Antriebsanordnung für ein Kraftfahrzeug mit einer Verbrennungskraftmaschine, und einem Hybridmodul (1) nach einem der vorhergehenden Ansprüche, das mit einem Getriebe, umfassend eine oder mehrere Getriebeeingangswellen (32, 33), verbunden ist oder verbindbar ist.

## Claims

1. Hybrid module (1) for a motor vehicle for coupling to an internal combustion engine, with a separating clutch (2), by means of which the internal combustion engine can be separated from a drivetrain of the motor vehicle and by means of which torque can be transferred to the drivetrain by the internal combustion engine, with an electric motor (3) which, for torque transmission, can be connected via a main clutch (4) to the drivetrain, wherein a separating clutch actuation system (5) is used to bring about an actuation of the separating clutch (2) and a main clutch actuation system (6) is used to bring about an actuation of the main clutch (4), **characterized in that** both actuation systems (5, 6) are arranged between the separating clutch (2) and the main clutch (4) and **in that** the two actuation systems (5, 6) are integrated in a common bearing carrier (7), wherein the common bearing carrier (7) has extension spaces in which either a separating clutch piston or a main clutch piston are arranged so as to be axially displaceable,
wherein the common bearing carrier (7) is fixedly connected to a section or housing fixed to the vehicle frame.

2. Hybrid module (1) according to claim 1, **characterized in that** the main clutch (4) is formed as a single clutch or as a dual clutch.

3. Hybrid module (1) according to claim 1 or 2, **characterized in that** an intermediate shaft (14) is mounted on the bearing carrier (7), wherein the intermediate shaft (14) is a shaft which, in a position of the main clutch (4) in which no torque is transferred to a transmission input shaft (32, 33) by the electric motor (3) and/or the internal combustion engine, is mounted rotationally movable relative to the transmission shaft (32, 33).

4. Hybrid module (1) according to one of claims 1 to 3, **characterized in that** the separating clutch actuation system (5) and/or the main clutch actuation system (6) is formed as a hydraulic, hydrostatic, pneumatic, electromechanical or mechanical system.

5. Hybrid module (1) according to claim 4, **characterized in that** the separating clutch actuation system (5) and/or the main clutch actuation system (6) comprises one or more CSCs (37).

6. Hybrid module (1) according to one of claims 3 to 5, **characterized in that** the common bearing carrier (7) of the two actuation systems (5, 6) radially and/or axially supports / mounts the intermediate shaft (14) by means of preferably one bearing carrier rolling bearing (13) or one bearing carrier plain bearing.

7. Hybrid module (1) according to one of claims 3 to 6, **characterized in that** a common bearing position (12) is formed on the common bearing carrier (7), which common bearing position mounts the intermediate shaft (14), a rotor (17) of the electric motor (3), the main clutch (4) and/or the separating clutch (2) in a rotationally movable manner.

8. Hybrid module (1) according to one of claims 1 to 7, **characterized in that** the main clutch (4) and/or the separating clutch (2) is formed as a multi-disc clutch.

9. Drive arrangement for a motor vehicle with an internal combustion engine, and a hybrid module (1) according to one of the preceding claims which is connected or can be connected to a transmission comprising one or more transmission input shafts (32, 33).

## Revendications

1. Module hybride (1) pour un véhicule automobile prévu pour un couplage à un moteur à combustion interne, avec un embrayage de coupure (2) à l'aide duquel le moteur à combustion interne peut être séparé d'une chaîne cinématique du véhicule automobile et à l'aide duquel le couple de rotation du moteur à combustion interne peut être amené à la chaîne cinématique, avec un moteur électrique (3) pouvant être relié à la chaîne cinématique via un embrayage principal (4) pour la transmission du couple de rotation, un système d'actionnement d'embrayage de coupure (5) étant utilisé pour provoquer un actionnement de l'embrayage de coupure (2) et un système d'actionnement d'embrayage principal (6) étant utilisé pour provoquer un actionnement de l'embrayage principal (4), **caractérisé en ce que** les deux systèmes d'actionnement (5, 6) sont disposés entre l'embrayage de coupure (2) et l'embrayage principal (4) et que les deux systèmes d'actionnement (5, 6) sont intégrés dans un support de palier commun (7), le support de palier commun (7) comportant des espaces de sortie dans lesquels sont disposés soit un piston d'embrayage de coupure ou soit un piston d'embrayage principal de façon à pouvoir être déplacés dans le plan axial ;
le support de palier commun (7) étant relié fixement à une section fixe de châssis de véhicule ou à un carter.

2. Module hybride (1) selon la revendication 1, **caractérisé en ce que** l'embrayage principal (4) est réalisé sous la forme d'un embrayage simple ou sous la forme d'un double embrayage.

3. Module hybride (1) selon la revendication 1 ou 2, **caractérisé en ce qu'**un arbre intermédiaire (14) est disposé sur le support de palier (7), l'arbre intermédiaire (14) étant un arbre disposé de façon mobile en rotation par rapport à l'arbre de boîte de vitesses (32, 33) lorsque l'embrayage principal (4) se trouve dans une position dans laquelle aucun couple de rotation n'est transmis à un arbre d'entrée de boîte de vitesses (32, 33) par le moteur électrique (3) et/ou le moteur à combustion interne.

4. Module hybride (1) selon l'une quelconque des revendications 1 à 3, **caractérisé en ce que** le système d'actionnement d'embrayage de coupure (5) et/ou le système d'actionnement d'embrayage principal (6) est réalisé sous la forme d'un système hydraulique, hydrostatique, pneumatique, électromécanique ou mécanique.

5. Module hybride (1) selon la revendication 4, **caractérisé en ce que** le système d'actionnement d'embrayage de coupure (5) et/ou le système d'actionnement d'embrayage principal (6) comprend un ou plusieurs CSCs (37).

6. Module hybride (1) selon l'une quelconque des revendications 3 à 5, **caractérisé en ce que** le support de palier commun (7) des deux systèmes d'actionnement (5, 6) soutient / loge dans le plan radial et/ou dans le plan axial l'arbre intermédiaire (14) à l'aide de la façon la plus probable d'un palier de roulement de support de palier (13) ou d'un palier coulissant de support de palier.

7. Module hybride (1) selon l'une quelconque des revendications 3 à 6, **caractérisé en ce qu'**un point d'appui commun 12) est réalisé au niveau du support de palier commun (7) qui loge de façon mobile en rotation l'arbre intermédiaire (14), un rotor (17) du moteur électrique (3), l'embrayage principal (4) et/ou l'embrayage de coupure (2).

8. Module hybride (1) selon l'une quelconque des revendications 1 à 7, **caractérisé en ce que** l'embrayage principal (4) et/ou l'embrayage de coupure (2) est réalisé sous la forme d'un embrayage à plusieurs disques.

9. Agencement d'entraînement pour un véhicule automobile équipé d'un moteur à combustion interne et d'un module hybride (1) selon l'une quelconque des revendications précédentes qui est relié ou peut être relié à une boîte de vitesses, comprenant un ou plusieurs arbres d'entrée de boîte de vitesses (32, 33).
